# EUROPÄISCHE PATENTSCHRIFT

(11) **EP 0 989 019 B1**
(45) Veröffentlichungstag und Bekanntmachung des Hinweises auf die Patenterteilung: **20.11.2002**
(21) Anmeldenummer: 99118590.1
(22) Anmeldetag: 21.09.1999
(51) Int. Cl.: B60N 2/44

(54) **Fahrzeugsitz und Verfahren zu seiner Herstellung**
Vehicle seat and method for its manufacture
Siège de véhicule et méthode pour sa fabrication

(30) Priorität: 22.09.1998 DE 29816819 U
(43) Veröffentlichungstag der Anmeldung: 29.03.2000
(73) Patentinhaber: Hydro Aluminium Deutschland GmbH, 53117 Bonn (DE)
(72) Erfinder: Söllner, Gerhardt, 53757 St. Augustin (DE); Gehrmann, Jörg, 50969 Köln (DE); Vogt, Rolf, 53123 Bonn (DE); Gomon, Volker, 42799 Leichlingen (DE); Griep, Winfried, 53225 Bonn (DE); Hellenkamp, Michael, 50389 Wesseling (DE); Busemann, Lothar, 39042 Brixen (IT); Dede, Carsten, St. Augustine, FL 32095 (US)
(74) Vertreter: Cohausz & Florack

(56) Entgegenhaltungen:
- EP-A- 0 625 445
- DE-A- 3 239 292
- DE-A- 4 303 006
- DE-A- 19 514 941
- US-A- 4 804 226
- US-A- 5 645 316
- US-A- 5 791 738

## Beschreibung

Die Erfindung betrifft Fahrzeugsitze, insbesondere für Kraftfahrzeuge, bestehend aus einer Lehne mit Rückwand, einer Sitzschale mit Sitzschiene zur Befestigung des Fahrzeugsitzes am Fahrzeugboden und einem zwischen der Lehne und der Sitzschale angeordnetem Scharnierteil (s. zum Beispiel US-A-4 804 226, dem Oberbegriff des unabhängigen Anspruchs 1 entsprechend). Fahrzeugsitze werden üblicherweise aus Stahlrohren oder aus Blechschalen hergestellt.

Stahlrohr-Fahrzeugsitze bestehen üblicherweise aus vielen Einzelteilen, die in einem relativ komplizierten Fertigungsverfahren zusammengefügt bzw. geschweißt werden. Das Gewicht eines fertigen Stahlrohrsitzes liegt je nach Ausstattung zwischen 35 und 45 kg.

Um das Gewicht zu reduzieren und die Fertigung zu vereinfachen wurden auch schon Fahrzeugsitze aus Aluminium hergestellt, wobei jeweils getrennte Aluminiumschalen für die Lehne und für die Sitzfläche aus gewalzten Aluminiumblechen hergestellt wurden. Die Aluminiumbleche konnten aber nicht an den für eine hohe Energieaufnahme bei Unfällen erforderlichen Kraftfluß angepaßt werden. Insbesondere bei einem Seitenaufprall bietet eine aus einer Aluminiumschale geformte Sitzlehne nur geringe Sicherheiten. Die dann erforderlichen Verstärkungen führen zu einer Erhöhung des Gewichtes und auch zu vermehrten Fertigungskosten.

Aufgabe der vorliegenden Erfindung ist es daher, ein Fahrzeugsitz der eingangs genannten Art derart auszubilden, daß er bei einem günstigen Gewicht eine belastungs- und funktionsgerechte Profilform aufweist, die je nach Komfortausstattung in gewissen Grenzen variabel ist, wobei die Fertigung durch Verwendung möglichst geringer Teilezahlen gegenüber dem Stand der Technik verbilligt werden soll.

Diese Aufgabe wird erfindungsgemäß durch die in Kennzeichen des unabhängigen Anspruchs 1 sowie die im unabhängigen Verfahrensanspruch 22 angegebenen Merkmale gelöst. Weitere Merkmale der Erfindung sind in den Unteransprüchen angegeben. Es hat sich gezeigt, daß ein als Integralelemente ausgebildetes Aluminium-Strangpreßprofil die jeweiligen Anforderungen an die Lehne und an die Sitzschale hinsichtlich eines optimalen Kraftfluß-Verlaufes, einer hohen Energieaufnahme bei Seitenaufprall, einer Verhinderung des "Abtauchens" bei einem Frontalaufprall und hinsichtlich einer ergonomischen Gestaltung und Variabilität erfüllt.

Weitere Einzelheiten der Erfindung werden im folgenden anhand mehrerer Ausführungsbeispiele näher erläutert. Es zeigen:
- Fig. 1: perspektivische Seitenansicht eines erfindungsgemäßen Fahrzeugsitzes,
- Fig. 2: eine erfindungsgemäße Sitzschale in Draufsicht,
- Fig. 3: Querschnitt durch ein erfindungsgemäßes Sitzschalenprofil,
- Fig. 4: Querschnitt durch ein erfindungsgemäßes Abschlußprofil,
- Fig. 5: erfindungsgemäßer Fahrzeugsitz in Seitenansicht,
- Fig. 6: Querschnitt durch einen Lehnenstrangpreßprofil entlang der Linie AA gemäß Figur 5,
- Fig. 7: erfindungsgemäßes Lehnenstrangpreßprofil,
- Fig. 8: Detailausschnitt gemäß Figur 7, Position B,
- Fig. 9: Querschnitt durch ein erfindungsgemäßes Lehnenstrangpreßprofil entlang der Linie CC nach Figur 7,
- Fig. 10: Querschnitt durch eine alternative Ausführungsform des Lehnenstrangpreßprofils.

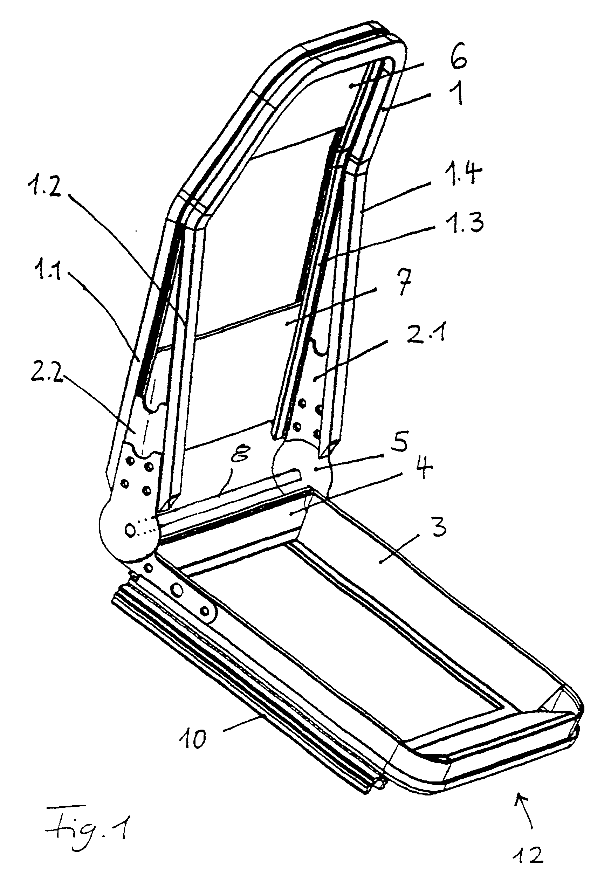

In Figur 1 ist der erfindungsgemäße Fahrzeugsitz, bestehend aus einem Lehnenstrangpreßprofil 1 und einem Sitzschalenstrangpreßprofil 3 dargestellt. Zwischen den aufgebogenen Schenkeln der Hohlkammern 1.1, 1.2 und 1.3, 1.4 des Lehnenstrangpreßprofils 1 befinden sich zwei Einsatzbleche 2.1 und 2.2. Die Einsatzbleche 2.1 und 2.2 werden vorzugsweise mit speziell ausgebildeten Verbindungsstegen an den aufgebogenen Enden des Lehnenstrangpreßprofils 1 verschweißt.

Das Lehnenstrangpreßprofil 1 ist als U-Träger verformt, wobei das U mit seinen offenen Enden an ein Scharnierteil 5, z.B. einem Stahlrecliner, anschließt. Somit wird die Lehne aus einem auf dem Kopf stehenden U-Träger gebildet, wobei der Boden des U-Trägers als integrierte Kopfstütze ausgebildet ist und zur Versteifung einer Aluminiumsandwichplatte 6 aufweist.

Zwischen den offenen Schenkeln des U-Trägers befindet sich eine Aluminiumsandwichplatte 7, die für die Befestigung einer Lordosenstütze geeignet ist. Beide Sandwichplatten werden vorzugsweise in dafür speziell ausgebildete Nuten des Lehnenstrangpreßprofils 1 eingesetzt und verklebt.

Im Sitzbereich erkennt man in Figur 1 zwei am Sitzschalenprofil angeordnete Sitzschienen 10, 11, die einstückig mit dem Strangpreßprofil der Sitzschale ausgebildet sind.

Parallel zum Frontbereich 12 befindet sich ein Abschlußprofil 4, das die Formstabilität des Sitzschalenprofils verbessert. Es kann aber auch durch eine üblicherweise zwischen den Scharnierteilen 5 angeordnete Verbindungsachse 8 ersetzt werden.

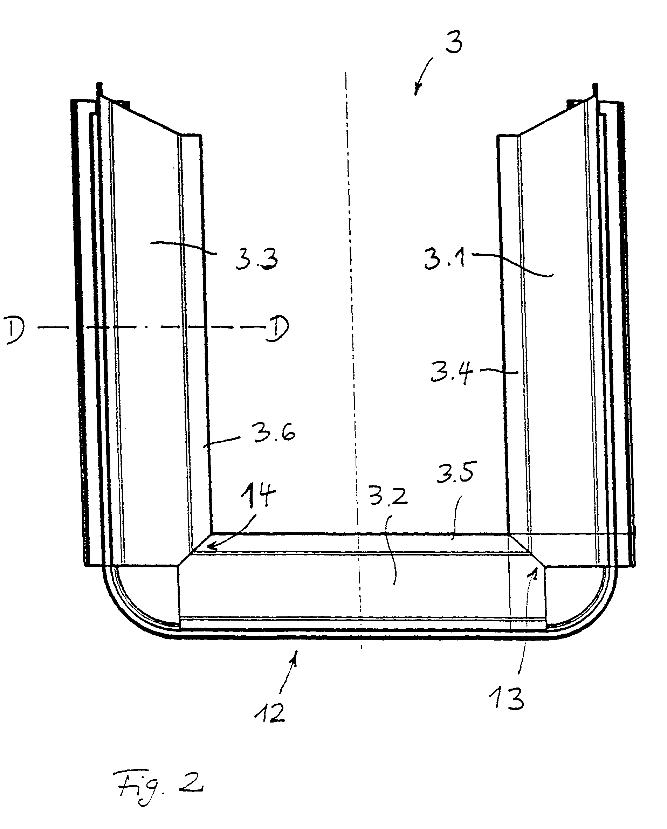

Figur 2 zeigt das Sitzschalenprofil ohne Abschlußleiste, das schon eine sehr hohe Steifigkeit und Formentreue durch die Verschweißung der schrägen Wandflächen 3.1 - 3.3 und der Flanschbereiche 3.4 - 3.6 aufweist. Die Verschweißung erfolgt in den Gehrungs-Schnitten 13, 14. Zwischen den Flanschbereichen 3.4 - 3.6 können Gitternetze oder Plastikschalen eingehängt bzw. verschraubt werden, wodurch für eine feste Unterlage für die Polsterung des Sitzes gesorgt ist.

Das erfindungsgemäße Sitzschalenprofil bietet die Möglichkeit, zwischen dem inneren Flanschbereich verschiedene elastische Sitzflächen einzuspannen. Dabei können einzelne elastische Spannelemente oder auch Drahtgeflechte zur Herstellung einer elastischen Sitzfläche verwendet werden. Um die Flanschbereiche ausreichend stabil zu machen, werden sie nach dem Ausstanzen der Ecke in dem zu biegenden Bereich bis auf die äußere Umrandung freigelegt und dann in einem 90°-Winkel zu dem Frontteil der Sitzschale gebogen. Sobald sie die richtige Position inne haben, erfolgt ein Verschweißen an den ausgestanzten Rändern.

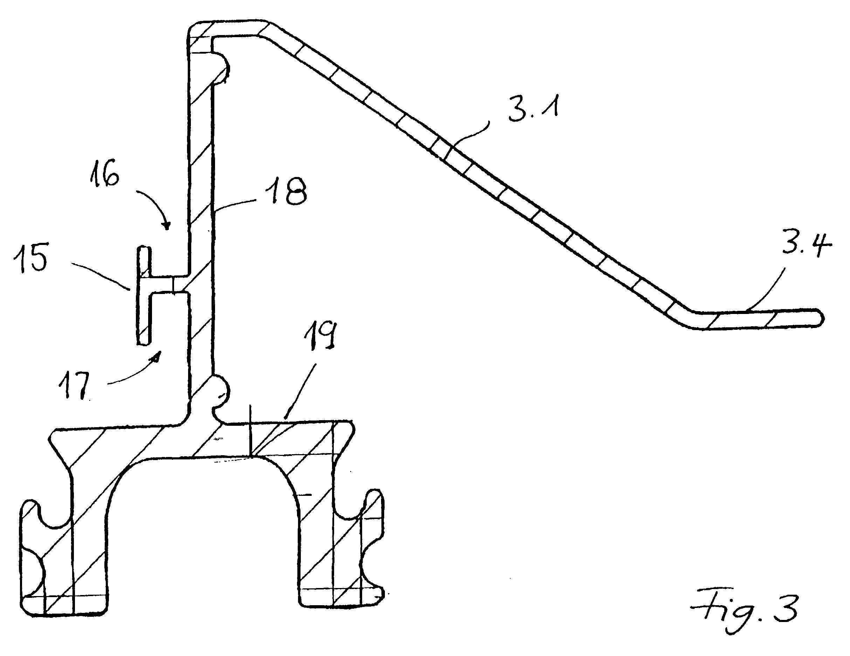

Figur 3 zeigt einen Querschnitt durch ein erfindungsgemäßes Sitzschalenstrangpreßprofil entlang Linie DD gemäß Figur 2. Die Grundform des Sitzschalenstrangpreßprofils besteht aus einem nach unten offenen Winkelprofil, wobei der eine Schenkel im wesentlichen senkrecht mit einem nach außen weisenden T-Anschlußprofil 15 ausgebildet ist. Die obere Nut 16 des Anschlußprofils 15 kann für die Befestigung des Recliners (Scharnierteil 5) und die untere Nut 17 für einen Stoffeinzug der Polsterung genutzt werden.

Am Fußende des senkrecht stehenden Wandprofils 18 ist das eigentliche Sitzschienenprofil 19 angeformt. Das Sitzschienenprofil 19 kann an die herkömmliche Sitzschienenmechanik angepaßt werden. Die Anbindung an die senkrechte Wand 18 sollte vorzugsweise mittig zum Sitzschienenprofil 19 erfolgen.

Die Bearbeitung erfolgt durch Abtrennen der Sitzschiene vom Sitzschienenprofil an der Frontseite 12 und an den Eckbereichen. Der untere Bogen des U-Profilsitzteils hat eine geringere Profilbreite als die Schenkelbereiche.

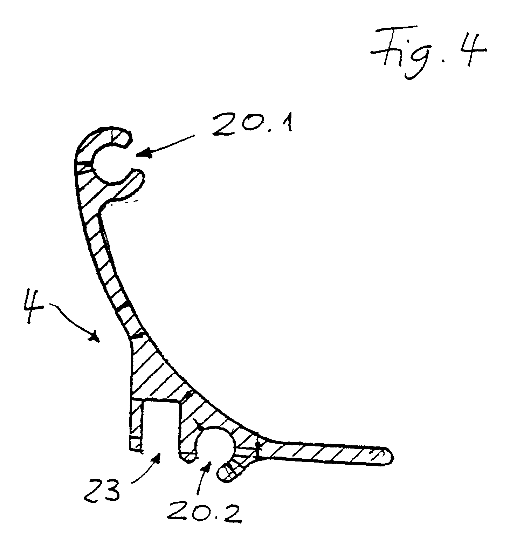

Wie vorstehend im Zusammenhang mit Figur 2 erläutert kann ggf. ein Abschlußprofil 4 zwischen die offenen Schenkel des gebogenen Sitzschalenprofils angeordnet werden. Eine Ausführungsform für ein derartiges Abschlußprofil 4 zeigt die Figur 4 im Querschnitt. Dabei wurde ein im Querschnitt schalenförmig ausgebildetes Abschlußprofil gewählt, wobei im oberen Bereich ein nach innen geöffneter Schraubkanal 20.1 und im unteren Bereich ein nach außen offener Schraubkanal 20.2 angeordnet ist. Mittels dieser Schraubkanäle 20.1, 20.2 läßt sich das Anschlußprofil 4 in entsprechend vorbereitete Bohrungen 21, 22 am Sitzschalenprofil 3 befestigen.

Es lassen sich die Anschlußquerschnitte des Anschlußprofils 4 aber auch durch Schweißen mit den Schenkeln des U-Profilsitzteils verbinden. Dann können die Schraubkanäle entfallen, so daß die Form der Querstrebe vereinfacht wird.

Für den Stoffeinzug ist eine Nut in Form eines Stoffeinzugkanals 23 an der Außenseite des Abschlußprofils 4 angeordnet. Mit der nach unten offenen Nut in U-Form läßt sich der Stoff über die Sitzlehne spannen.

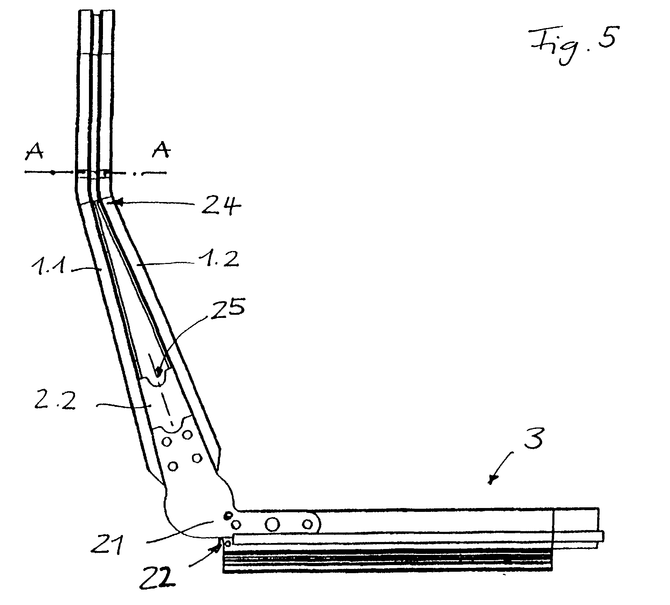

Figur 5 zeigt noch einmal den gesamten Fahrzeugsitz als Seitenansicht, wobei zwischen den aufgebogenen Hohlkammern 1.1, 1.2 das Einsatzblech 2.2 eingeschweißt ist. Zur Optimierung des Kraftflusses sind sowohl an der Spitze des durch die aufgebogenen Schenkel der Hohlkammern 1.1 und 1.2 gebildeten Winkels als auch in der Oberkante des Einsatzbleches 2.2 Radien 24, 25 ausgebildet.

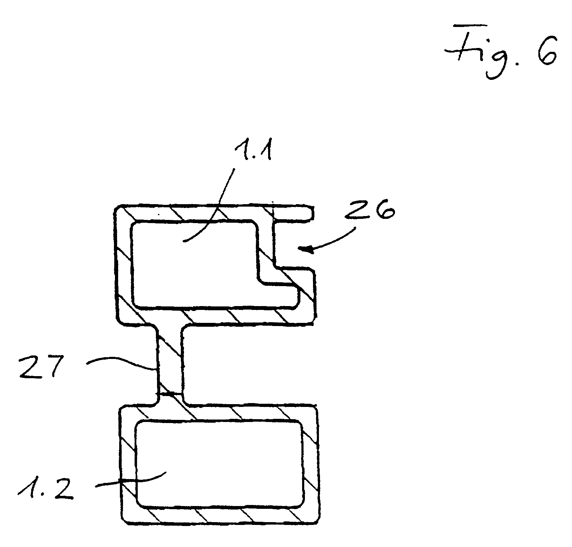

Der Vorgang des Aufspreizens der Schenkel wird anhand der nachfolgenden Figuren 6, 7, 8 und 9 nochmals erläutert.

Figur 6 zeigt einen Querschnitt durch das Lehnenstrangpreßprofil 1, etwa in der Höhe AA, wobei an der hinteren Hohlkammer 1.1 eine Nut 26 für die Aufnahme der oberen Sandwichplatte 6 angeformt ist. Etwa in der Mitte des Verbindungssteges 27 zwischen den Hohlkammern 1.1 und 1.2 kann der Trennschnitt für das Aufbiegen der Schenkel erfolgen.

Das Durchtrennen des Verbindungssteges 27 an den beiden Seitenflächen der Lehne kann durch Einsägen, Stanzen oder ähnliche Bearbeitung erfolgen. Wichtig ist, daß in den Endpunkten der Trennlinie jeweils eine Bohrung angebracht wird. Diese Bohrung sitzt in dem sich bildenden spitzen Winkel nach dem Aufbiegen der Hohlkammern und vermeidet das Auftreten einer Kerbwirkung im Trennschnitt.

Eine Kammer des Doppel-Hohlkammerprofils enthält die Nut 26, die mit ihrer Öffnung zur Innenseite des U-Trägers gerichtet ist. In diese Nut 26 kann abschnittsweise oder vollflächig eine Rückwand eingesetzt werden, die zur Versteifung der Lehne beiträgt.

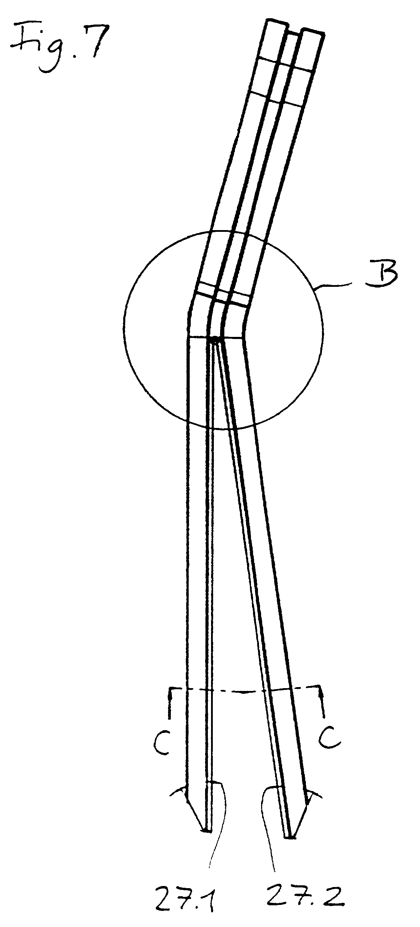

Figur 7 zeigt das Lehnenstrangpreßprofil 1 nach Durchführung eines Trennschnittes und nach dem Aufbiegen der Schenkel. Man erkennt die beiden verbliebenen Hälften 27.1, 27.2 des Verbindungssteges 27, die für die Befestigung des trapezförmigen Einsatzbleches 2.2 genutzt werden können.

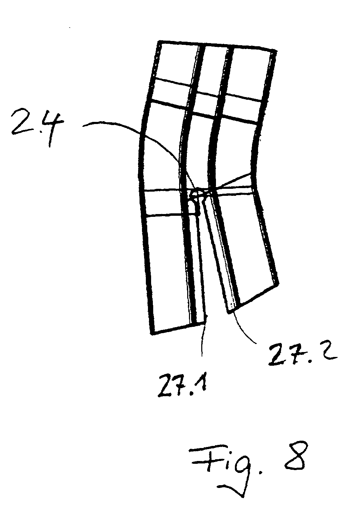

Ein vergrößerter Ausschnitt im Bereich B der Figur 7 ist in Figur 8 dargestellt. Man erkennt den oberen Abschnitt von Radius 24 sowie die beiden Steghälften 27.1, 27.2. Der untere Bereich der aufgebogenen Schenkel ist entlang der Linie CC geschnitten, wobei das Einsatzblech 2.2 an den Steghälften 27.1, 27.2 mittels Schweißnähten 28, 29 befestigt ist.

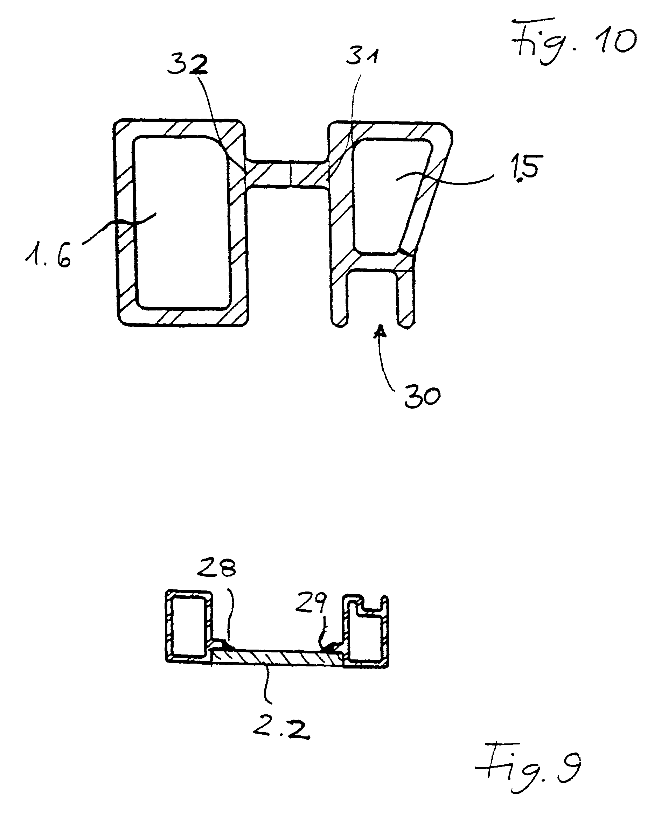

Ein Querschnitt entlang der Linie CC ist der Figur 9 zu entnehmen. Aus Gründen der Erhöhung der Dauerfestigkeit wurde die Wärmeeinflußzone der Schweißnähte 28, 29 aus dem kritischen Bereich der Basisflächen 31, 32 der Steghälften 27.1, 27.2 herausgenommen und in den mittleren Bereich des Einsatzbleches 2.2 verlegt. Damit wird das Energieaufnahmevermögen des Fahrzeugsitzes weiter verbessert.

Eine andere Variante des erfindungsgemäßen Lehnenstrangpreßprofils zeigt Figur 10. Sie besteht gegenüber der in Figur 6 dargestellten Ausführungsform aus einer vergrößerten Vorderkammer 1.6 und einer verkleinerten Hinterkammer 1.5 an die eine Einstecknut 30 für die Befestigung eines Sandwichbleches angeformt ist. Da das vordere Kammerprofil beim Frontalaufprall auf Zug beansprucht wird, ist es entsprechend größer dimensioniert als das hintere Kammerprofil, das in diesem Belastungsfall auf Druck beansprucht wird. Die Energieaufnahme beim Seitencrash kann durch eine Verbreiterung bzw. Vergrößerung der Sandwichbleche beeinflußt werden.

### Bezugszeichenliste

- 1: Lehnenstrangpreßprofil
- 1.1 - 1.4: Hohlkammern
- 1.5: Hinterkammer
- 1.6: Vorderkammer
- 2.1, 2.2: Einsatzbleche
- 3: Sitzschalenstrangpreßprofil
- 3.1 - 3.3: Wandflächen
- 3.4 - 3.6: Flanschbereiche
- 4: Abschlußprofil
- 5: Scharnierteil
- 6: Aluminiumsandwichplatte, Sandwichplatte
- 7: Aluminiumsandwichplatte
- 8: Verbindungsachse
- 9: -
- 10, 11: Sitzschienen
- 12: Frontbereich
- 13, 14: Gehrungs-Schnitt
- 15: T-Anschlußprofil, Anschlußprofil
- 16: obere Nut
- 17: untere Nut
- 18: Wand
- 19: Sitzschienenprofil
- 20.1, 20.2: Schraubkanal
- 21, 22: Bohrungen
- 23: Stoffeinzugkanal
- 24, 25: Radien
- 26: Nut
- 27: Verbindungssteg
- 27.1, 27.2: Hälften des Verbindungssteges, Steghälften
- 28, 29: Schweißnähten
- 30: Einstecknut

- A.A.: Höhe

## Patentansprüche

1. Fahrzeugsitz, bestehend aus einer Lehne mit Rückwand, einer Sitzschale mit Sitzschiene zur Befestigung des Fahrzeugsitzes am Fahrzeugboden und einem zwischen der Lehne und der Sitzschale angeordnetem Scharnierteil, wobei die
Lehne und/oder Sitzschale aus einem Aluminiumstrangpreßprofil (1, 3) bestehen und das Lehnenstrangpreßprofil (1) als U-Träger verformt ist, **dadurch gekennzeichnet, daß** der U-Träger aus einem im Querschnitt gesehen Doppel-Hohlkammerprofil (1.1-1.4) besteht, und wobei zwischen den beiden Hohlkammern mindestens ein verbindungssteg angeordnet ist.

2. Fahrzeugsitz nach Anspruch 1,
**dadurch gekennzeichnet,**
**daß** die Hohlkammern durch den oder die Verbindungsstege auf Abstand gehalten werden.

3. Fahrzeugsitz nach Anspruch 1 oder 2,
**dadurch gekennzeichnet,**
**daß** der Verbindungssteg (27) an den beiden Seitenflächen der Lehne durchtrennt ist und die Hohlkammern durch Aufbiegung in einem vergrößerten Abstand zueinander angeordnet sind.

4. Fahrzeugsitz nach einem der vorhergehenden Ansprüche,
**dadurch gekennzeichnet,**
**daß** der Verbindungssteg (27) an den beiden Seitenflächen der Lehne eingesägt ist.

5. Fahrzeugsitz nach einem der vorhergehenden Ansprüche,
**dadurch gekennzeichnet,**
**daß** zwischen den aufgebogenen Profilhohlkammern des Lehnenstrangpreßprofils mindestens ein trapezförmiges Einsatzblech eingeschoben und fixiert ist.

6. Fahrzeugsitz nach einem der vorhergehenden Ansprüche,
**dadurch gekennzeichnet,**
**daß** die Fixierung des Einsatzbleches an den Restprofilstegen des eingesägten Verbindungssteges (27) erfolgt ist.

7. Fahrzeugsitz nach einem der vorhergehenden Ansprüche,
**dadurch gekennzeichnet,**
**daß** die Wandstärke des Verbindungssteges im wesentlichen gleich ist mit der Wandstärke des Einsatzbleches.

8. Fahrzeugsitz nach einem der vorhergehenden Ansprüche,
**dadurch gekennzeichnet,**
**daß** die Dicke des Einsatzbleches je nach den Anforderungen an die Lehnensteifigkeit variierbar ist.

9. Fahrzeugsitz nach einem der vorhergehenden Ansprüche,
**dadurch gekennzeichnet,**
**daß** als Rückwand in die als Nut ausgebildeten Profilanschlüsse des Lehnenstrangpreßprofils mindestens eine Aluminiumsandwichplatte eingeschoben und fixiert ist.

10. Fahrzeugsitz nach einem der vorhergehenden Ansprüche,
**dadurch gekennzeichnet,**
**daß** die Aluminiumsandwichplatte im Beckenbereich eine pneumatische Lordosenverstellung aufweist.

11. Fahrzeugsitz nach einem der vorhergehenden Ansprüche,
**dadurch gekennzeichnet,**
**daß** die Aluminiumsandwichplatte durch Verklebung fixiert wird.

12. Fahrzeugsitz nach einem der vorhergehenden Ansprüche,
**dadurch gekennzeichnet,**
**daß** das Einsatzblech im Lehnenstrangpreßprofil angeschweißt ist, wobei die Schweißnaht den Übergang des Verbindungssteges zum Einsatzblech auf der Lehnenrückseite überdeckt.

13. Fahrzeugsitz nach einem der vorhergehenden Ansprüche,
**dadurch gekennzeichnet,**
**daß** als Scharnierteil (5) ein Stahlrecliner verwendet wird.

14. Fahrzeugsitz nach einem der vorhergehenden Ansprüche,
**dadurch gekennzeichnet,**
**daß** das Sitzschalenstrangpreßprofil (3) im Querschnitt gesehen die Form eines nach unten offenen Winkelprofils aufweist, wobei der eine Schenkel des Winkels als senkrechte Wand mit einem nach außen weisenden T-Anschlußelement für die Befestigung des Recliners sowie für einen Stoffeinzug ausgebildet ist, während der andere Schenkel im Winkel von 40 - 60° zum inneren der Sitzschale verläuft und an seinem Ende in ein horizontales Flanschteil übergeht.

15. Fahrzeugsitz nach einem der vorhergehenden Ansprüche,
**dadurch gekennzeichnet,**
**daß** beliebige Sitzschienenprofile am Fuße des senkrecht stehenden Schenkels als Anschlußprofil angeformt sind.

16. Fahrzeugsitz nach einem der vorhergehenden Ansprüche,
**dadurch gekennzeichnet,**
**daß** die Sitzschale als U-Profilteil ausgebildet ist.

17. Fahrzeugsitz nach einem der vorhergehenden Ansprüche,
**dadurch gekennzeichnet,**
**daß** als Abschlußprofil (4) für das U-Profilsitzteil ein im Querschnitt schalenförmiges Strangpreßteil parallel zum Fronteil der Sitzschale angeordnet ist, wobei am unteren Schalenrand des Anschlußteiles ein Stoffeinzugkanal (23) ausgebildet ist.

18. Fahrzeugsitz nach einem der vorhergehenden Ansprüche,
**dadurch gekennzeichnet,**
**daß** die schrägen Wandflächen (3.1 - 3.3) und Flanschbereiche (3.4 - 3.6) des Sitzschalenprofils im Biegebereich teilweise ausgestanzt sind.

19. Fahrzeugsitz nach einem der vorhergehenden Ansprüche,
**dadurch gekennzeichnet,**
**daß** die auf Gehrung geschnittenen Flansch- und Wandbereiche des Sitzschalenprofils durch Schweißen verbunden sind.

20. Fahrzeugsitz nach einem der vorhergehenden Ansprüche,
**dadurch gekennzeichnet,**
**daß** das Abschlußprofil (4) die Form einer Querstrebe aufweist und mit selbstschneidenden Schrauben in der Sitzschale befestigt ist, wobei am oberen und unteren Anschlußquerschnitt je ein Schraubkanal (20.1, 20.2) ausgebildet ist.

21. Fahrzeugsitz nach einem der vorhergehenden Ansprüche,
**dadurch gekennzeichnet,**
**daß** auf der Innenseite der Flanschbereiche eine elastische Sitzfläche gebildet ist.

22. Verfahren zur Herstellung eines Fahrzeugsitzes nach einem der vorhergehenden Ansprüche,
**dadurch gekennzeichnet,**
**daß** von den beiden Enden des Sitzschalenprofils zwei gleichlange Seitenteile abgemessen und im 90°-Winkel zu dem Frontteil der Sitzschale abgebogen und verschweißt werden.

23. Verfahren zur Herstellung eines Fahrzeugsitzes nach einem der vorhergehenden Ansprüche,
**dadurch gekennzeichnet,**
**daß** das Sitzschalenprofil so bearbeitet ist, daß es nur an den zwei geraden Schenkeln je eine Sitzschiene (10, 11) aufweist, während die Profilkanäle für den Stoffeinzug vollständig umlaufend ausgebildet sind.

24. Verfahren zur Herstellung eines Fahrzeugsitzes nach einem der vorhergehenden Ansprüche,
**dadurch gekennzeichnet,**
**daß** die Ausstanzung an den schrägen Wänden und Flanschen in Form eines Gehrungs-Schnittes (13, 14) erfolgt.

## Claims

1. A vehicle seat, consisting of a seat-back with back wall, a seat bucket with seat rail to mount the vehicle seat to the vehicle floor, and a hinge section arranged between the seat and the seat bucket, wherein the seat-back and/or seat bucket consists of an aluminium extruded profile (1, 3), and the seat-back extruded profile (1) is deformed as a U-beam,
characterise in that,
the U-beam consists of a dual hollow chamber profile (1.1-1.4) viewed in cross section, and wherein at least one connecting web is arranged between the two hollow chambers.

2. The vehicle seat according to claim 1,
**characterised in that**,
the hollow chambers are spaced apart by the connecting web or connecting webs.

3. The vehicle seat according to claim 1 or 2,
**characterised in that**,
the connecting web (27) is separated at the two lateral faces of the backrest, and the hollow chambers are arranged a greater distance apart by bending up the chambers.

4. The vehicle seat according to one of the preceding claims,
**characterised in that**,
the connecting web (27) is back-sawed on the two lateral surfaces of the seat-back.

5. The vehicle seat according to one of the preceding claims,
**characterised in that**,
at least one trapezoidal insert sheet is inserted and fixed between the bent up profile hollow chambers of the seat-back extruded profile.

6. The vehicle seat according to one of the preceding claims,
**characterised in that**,
the insert sheet is fixed on the residual profile webs of the back-sawed connecting web (27).

7. The vehicle seat according to one of the preceding claims,
**characterised in that**,
the wall thickness of the connecting web is essentially the same as the wall thickness of the insert sheet.

8. The vehicle seat according to one of the preceding claims,
**characterised in that**,
the thickness of the insert sheet can be varied depending on the requirements on seat-back stiffness.

9. The vehicle seat according to one of the preceding claims,
**characterised in that**,
at least one aluminium sandwich plate is inserted and fixed in the profile connections of the seat-back extruded profile designed as a groove.

10. The vehicle seat according to one of the preceding claims,
**characterised in that**,
the aluminium sandwich plate has a pneumatic lordosis adjustment in the pelvic area.

11. The vehicle seat according to one of the preceding claims,
**characterised in that**,
the aluminium sandwich plate is fixed via bonding.

12. The vehicle seat according to one of the preceding claims,
**characterised in that**,
the insert sheet is welded on the seat-back extruded profile, wherein the weld seam covers the transition of the connecting web to the insert sheet on the back of the seat-back.

13. The vehicle seat according to one of the preceding claims,
**characterised in that**,
a steel recliner is used as a hinge section (5).

14. The vehicle seat according to one of the preceding claims,
**characterised in that**,
the seat bucket extruded profile (3) is shaped like a downwardly open angle section when viewed in cross section, wherein the one leg of the angle is designed as a perpendicular wall with an outwardly pointing T-connection element for attaching the recliner, and as a material feed, while the other leg takes an angle of 40-60° relative to the inside of the seat bucket, and its end goes over into a horizontal flange section.

15. The vehicle seat according to one of the preceding claims,
**characterised in that**,
any seat rail profiles are shaped to the foot of the vertically standing leg as an connection profile.

16. The vehicle seat according to one of the preceding claims,
**characterised in that**,
the seat bucket is designed as a U-profile section.

17. The vehicle seat according to one of the preceding claims,
**characterised in that**,
an extruded part shaped like a bucket in cross section is arranged parallel to the front part of the seat bucket as a closing profile for the U-profile seat section, wherein a material feeder channel (23) is provided at the lower bucket edge of the connecting section.

18. The vehicle seat according to one of the preceding claims, **characterized in that** the inclined wall surfaces (3.1-3.3) and flange areas (3.4-3.6) of the seat bucket profile are partially cut out in the bent area.

19. The vehicle seat according to one of the preceding claims,
**characterised in that**,
the mitre cut flange and wall areas of the seat bucket profile are bonded via welding.

20. The vehicle seat according to one of the preceding claims,
**characterised in that**,
the closing profile (4) is shaped like a transverse beam, and secured with self-cutting screws in the seat bucket, wherein a screw channel (20.1, 20.2) is provided at both the upper and lower connection cross section.

21. The vehicle seat according to one of the preceding claims,
**characterised in that**,
an elastic seating is provided on the inside of the flange areas.

22. A procedure for manufacturing a vehicle seat according to one of the preceding claims,
**characterised in that**,
two equally long lateral sections of the two ends of the seat bucket profile are measured out, bent at a 90° angle relative to the front section of the seat bucket, and welded.

23. The procedure for manufacturing a vehicle seat according to one of the preceding claims,
**characterised in that**,
the seat bucket profile is machined in such a way as to have one seat rail (10, 11) on each of the two straight arms only, while the profile channels for feeding the material are provided around the entire perimeter.

24. The procedure for manufacturing a vehicle seat according to one of the preceding claims,
**characterised in that**,
the process of cutting out on the inclined walls and flanges takes the form of a mitre cut (13, 14).

## Revendications

1. Siège de véhicule, constitué d'un dossier avec une paroi arrière, un baquet de siège avec un rail de siège pour fixer le siège de véhicule au plancher du véhicule et une partie formant charnière disposée entre le dossier et le baquet de siège, dans lequel le dossier et/ou le baquet de siège sont constitués d'un profilé extrudé d'aluminium (1,3) et le profilé extrudé (1) du dossier est conformé en poutre en U, **caractérisé en ce que** la poutre en U est constituée d'un profilé (1.1-1.4) à double chambre creuse observée en coupe transversale, une barre de liaison étant disposée entre les deux chambres creuses.

2. Siège de véhicule selon la revendication 1, **caractérisé en ce que** les chambres creuses sont maintenues à distance par la ou les barres de liaison.

3. Siège de véhicule selon la revendication 1 ou 2, **caractérisé en ce que** la barre de liaison (27) est sectionnée sur les deux faces latérales du dossier et les chambres creuses sont agencées à plus grande distance l'une de l'autre par flexion.

4. Siège de véhicule selon l'une quelconque des revendications précédentes, **caractérisé en ce que** la barre de liaison (27) est entaillée sur les deux faces latérales du dossier.

5. Siège de véhicule selon l'une quelconque des revendications précédentes, **caractérisé en ce qu'**au moins une tôle rapportée en forme de trapèze est insérée et fixée entre les chambres creuses fléchies du profilé extrudé du dossier.

6. Siège de véhicule selon l'une quelconque des revendications précédentes, **caractérisé en ce que** la fixation de la tôle rapportée se fait sur les barres des profilés restantes de la barre de liaison entaillée (27).

7. Siège de véhicule selon l'une quelconque des revendications précédentes, **caractérisé en ce que** l'épaisseur de paroi de la barre de liaison est sensiblement égale à l'épaisseur de paroi de la tôle rapportée.

8. Siège de véhicule selon l'une quelconque des revendications précédentes, **caractérisé en ce que** l'épaisseur de la tôle rapportée peut varier en fonction des exigences imposées à la rigidité du dossier.

9. Siège de véhicule selon l'une quelconque des revendications précédentes, **caractérisé en ce qu'**au moins une plaque sandwich en aluminium est insérée et fixée comme paroi arrière dans les raccordements de profilé formés comme encoche du profilé extrudé du dossier.

10. Siège de véhicule selon l'une quelconque des revendications précédentes, **caractérisé en ce que** la plaque sandwich en aluminium présente un ajustement pneumatique de la lordose dans la zone du bassin.

11. Siège de véhicule selon l'une quelconque des revendications précédentes, **caractérisé en ce que** la plaque sandwich en aluminium est fixée par collage.

12. Siège de véhicule selon l'une quelconque des revendications précédentes, **caractérisé en ce que** la tôle rapportée est soudée dans le profilé extrudé du dossier, le cordon de soudure couvrant la transition entre la barre de liaison et la tôle rapportée sur la partie arrière du dossier.

13. Siège de véhicule selon l'une quelconque des revendications précédentes, **caractérisé en ce qu'**on utilise un élément inclinable en acier comme partie de charnière (5).

14. Siège de véhicule selon l'une quelconque des revendications précédentes, **caractérisé en ce que** le profilé extrudé (3) du baquet de siège, observé en coupe transversale, présente la forme d'un profilé angulaire ouvert vers le bas, la première côté de l'angle se présentant sous la forme d'une paroi verticale avec un élément de raccordement en T tourné vers l'extérieur pour la fixation de l'élément inclinable ainsi que pour un retrait de matériau, tandis que l'autre côté s'étend selon un angle de 40-60°C avec l'intérieur du baquet de siège et se convertit, à son extrémité, en une partie flasque horizontale.

15. Siège de véhicule selon l'une quelconque des revendications précédentes, **caractérisé en ce que** des profilés de rails de sièges quelconques sont moulés au pied du côté verticale comme profilé de raccordement.

16. Siège de véhicule selon l'une quelconque des revendications précédentes, **caractérisé en ce que** le baquet de siège se présente sous la forme d'une partie profilée en U.

17. Siège de véhicule selon l'une quelconque des revendications précédentes, **caractérisé en ce que** comme profilé d'arrêt (4) pour la partie de siège profilée en U une partie extrudée en forme de baquet de siège en coupe transversale est disposée parallèlement à la partie frontale du baquet de siège, un canal de retrait de matériau (23) étant formé sur le bord inférieur du baquet de la partie de raccordement.

18. Siège de véhicule selon l'une quelconque des revendications précédentes, **caractérisé en ce que** les surfaces de paroi obliques (3.1-3.3) et les zones de flasque (3.4-3.6) du profilé du baquet de siège sont en partie estampées dans la zone de flexion.

19. Siège de véhicule selon l'une quelconque des revendications précédentes, **caractérisé en ce que** les zones de flasque et de paroi du profilé du baquet de siège découpées en onglet sont reliées par soudure.

20. Siège de véhicule selon l'une quelconque des revendications précédentes, **caractérisé en ce que** le profilé d'arrêt (4) présente la forme d'une entretoise transversale et est fixé dans le baquet de siège par des vis autotaraudeuses, un canal de vissage (20.1, 20.2) étant formé respectivement sur la section transversale de raccordement supérieure et sur la section de raccordement inférieure.

21. Siège de véhicule selon l'une quelconque des revendications précédentes, **caractérisé en ce qu'**une surface de siège élastique est formée sur l'intérieur des zones de flasque.

22. Procédé de fabrication d'un siège de véhicule selon l'une quelconque des revendications précédentes, **caractérisé en ce que** deux parties latérales de même longueur sont déployées des deux extrémités du profilé du baquet de siège, sont repliées selon un angle de 90° de la partie frontale du baquet de siège et y sont soudées.

23. Procédé de fabrication d'un siège de véhicule selon l'une quelconque des revendications précédentes, **caractérisé en ce que** le profilé du baquet de siège est façonné de sorte qu'il présente seulement un rail de siège (10, 11) sur les deux côtés rectilignes, tandis que les canaux du profilé sont conformés sur toute la périphérie pour le retrait de matériau.

24. Procédé de fabrication d'un siège de véhicule selon l'une quelconque des revendications précédentes, **caractérisé en ce que** la découpe sur les parois obliques et les flasques se fait sous la forme d'une section en onglet (13, 14).
